# EUROPÄISCHE PATENTSCHRIFT

(11) **EP 4 021 728 B1**
(45) Veröffentlichungstag und Bekanntmachung des Hinweises auf die Patenterteilung: **25.06.2025**
(21) Anmeldenummer: 20761771.3
(22) Anmeldetag: 20.08.2020
(51) Int. Cl.: B33Y 80/00, B33Y 50/00, A61C 5/80, A61C 9/00, A61C 13/00, A61C 15/00, A61C 15/04, A61C 17/02

(54) **REINIGUNGSSCHABLONE ZUR ZAHNREINIGUNG, HERSTELLUNGSVERFAHREN UND SOFTWAREPRODUKT**
CLEANING GUIDE FOR DENTAL CLEANING, MANUFACTURING METHOD AND SOFTWARE PRODUCT
GUIDE DE NETTOYAGE POUR UN NETTOYAGE DENTAIRE, PROCÉDÉ DE FABRICATION ET PRODUIT LOGICIEL

(30) Priorität: 26.08.2019 DE 102019122852
(43) Veröffentlichungstag der Anmeldung: 06.07.2022
(73) Patentinhaber: Bredent GmbH & Co. KG, 89250 Senden (DE)
(72) Erfinder: BREHM, Peter, 89250 Senden (DE)
(74) Vertreter: Baur & Weber Patentanwälte PartG mbB
(86) Internationale Anmeldenummer: PCT/EP2020/073334
(87) Internationale Veröffentlichungsnummer: WO 2021/037667

(56) Entgegenhaltungen:
- US-A- 5 190 062
- US-A1- 2009 194 133
- US-A1- 2016 228 211
- US-A1- 2016 228 211

## Beschreibung

Die Erfindung betrifft eine Reinigungsschablone zur Zahnreinigung, nämlich zur Erleichterung der Zahnzwischenraumreinigung.

In der Mundhöhle bildet sich nach kurzer Zeit ein Belag auf den Zähnen, der auch als Plaque bezeichnet wird. Der Belag besteht großenteils aus Bakterien, deren Stoffwechselprodukte zu Zahnschäden (Karies) und Zahnfleischentzündungen (Gingivitis) bis hin zum Knochenabbau (Parodontitis) führen können. Diese Schäden können durch eine sorgfältige Zahnpflege verhindert werden, indem regelmäßig Zahnbelag und Speisereste gründlich entfernt werden.

Bei der Zahnpflege ist wichtig, dass sich die Zahnreinigung nicht nur auf die außen liegenden Zahnflächen beschränkt, die mittels einer konventionellen Zahnbürste gereinigt werden können, sondern auch die Zahnzwischenräume umfasst. Für die Zahnzwischenraumreinigung können Zahnseide oder Interdentalbürsten zum Einsatz kommen, deren Handhabung eine größere Fingerfertigkeit und Routine als der Einsatz der konventionellen Zahnbürste erfordert. Bei Verwendung von Halterungen für Zahnseide und Interdentalbürsten mit Griffen liegt solch ein Gerät zwar ähnlich wie eine Zahnbürste in der Hand, ist in der Handhabung jedoch aufwändiger, da die Geräteköpfe gezielt in die Zahnzwischenräume eingeführt und darin bewegt werden müssen, um sie zu reinigen.

Insbesondere bei älteren Patientinnen und Patienten ist eine regelmäßige gründliche Reinigung des Gebisses unerlässlich, weil mit zunehmendem Alter das Zahnfleisch zurückgeht. Dadurch wird die freiliegende, dem Belag und den Bakterien ausgesetzte Zahnoberfläche größer. Darüber hinaus verändert sich der Stoffwechsel im Alter in vielen Fällen ungünstig, beispielsweise durch chronische Krankheiten oder Medikamenteneinnahme, wodurch die Anfälligkeit für Karies und Parodontitis steigt, sodass typische Alterskrankheiten die Mundgesundheit negativ beeinflussen.

Auch bei Personen mit einem Implantat, die im fortgeschrittenen Lebensalter sein können aber nicht müssen, ist eine gründliche Zahnreinigung wichtig, um insbesondere Plaque und die darin enthaltenen Bakterien am Implantat-Zahnfleisch-Übergang des Implantats zu entfernen. Auf Grund der für Implantatkronen verwendeten biokompatiblen Werkstoffe ist die Anhaftung der Bakterien an der Implantatkrone um ein Vielfaches größer als beim Zahnschmelz der natürlichen Zähne. Bei unzureichender Reinigung können die Bakterien sich weiter ausbreiten und am Implantat entlang in die Tiefe des Kiefers steigen. Schlussendlich entsteht eine Entzündung am Zahnfleisch (Mucositis) und danach eine Entzündung des Knochens rund um das Implantat (Periimplantitis), die zum Verlust des Implantats führt.

Vielen Personen gelingt es auch durch eine gründliche Zahnpflege nicht, alle Zwischenräume und Nischen in der Mundhöhle zu erreichen und damit Plaque und die Bakterien zu entfernen. Dies betrifft insbesondere ältere Patientinnen und Patienten, bei denen die Fingerfertigkeit im Alter nachlässt. Auch eine durch Krankheit oder Behinderung eingeschränkte Fingerfertigkeit führt zu einer reduzierten Qualität der Putztechnik.

Diese Einschränkungen können soweit gehen, dass zahnpflegerischer Unterstützungsbedarf besteht und die Zahnpflege von einer Pflegekraft oder einem Angehörigen übernommen werden muss. Bei pflegebedürftigen Personen, deren Beeinträchtigung ihrer Selbstständigkeit oder Fähigkeiten sich über einen weiten Bereich des täglichen Lebens erstreckt, ist zahnpflegerische Unterstützung oft nur ein kleiner Teilaspekt der benötigten Unterstützung. Obgleich die Zahnpflege Teil des Leistungsspektrums von professionellen Pflegekräften ist, handelt es sich bei diesem Personenkreis in der Regel nicht um zahnmedizinisches oder dentalhygienisches Fachpersonal, das eine umfassende Ausbildung im Bereich der Zahnpflege und -hygiene absolviert hat. Gleiches gilt auch für pflegende Angehörige. Vielmehr ist die Zahnpflege eher ein Randaspekt ihres Tätigkeitsspektrums, sodass die Kenntnisse und Fertigkeiten der pflegenden Personen hinsichtlich der oben geschilderten Anforderungen an die Zahnpflege, insbesondere bei den Zahnzwischenräumen, häufig unzureichend sind.

Von den meisten Personen mit zahnpflegerischem Unterstützungsbedarf wird die Zahnreinigung durch eine andere Person als zumindest unangenehm und Eindringen in ihre intime Zone empfunden. Dieses Empfinden wird noch verstärkt, wenn bei der Zahnreinigung durch eine andere Person deren mangelnde Fertigkeiten zu schmerzhaften Episoden führen, wie es beispielsweise der Fall ist, wenn das Reinigungsgerät falsch angesetzt wird und das Zahnfleisch verletzt. Dieses kann dazu führen, dass die Person mit zahnpflegerischem Unterstützungsbedarf die Zahnpflege boykottiert. Gerade bei Personen, denen auf Grund mangelnden Wissens oder kognitiver Einschränkungen die Einsicht in die Notwendigkeit einer gründlichen Zahnpflege fehlt, kommt dieser Aspekt zum Tragen.

In der US 9,084,655 B2 wird eine Schiene gezeigt, die eine Mehrzahl von Bögen mit Zahnseide aufweist, die gleichzeigt in die Zahnzwischenräume einführbar sind.

Die US 5 190 062 A zeigt einen Zahnseidenhalter, der eine Vielzahl von Zahnseidefäden hält. Die Abstände der Zahnseidefäden sind so gewählt, dass sie an Zahnzwischenraumabstände eines bestimmten Benutzers angepasst sind.

Die US 2016/228211 A1 betrifft nicht die eigentliche Zahnreinigung, sondern zeigt eine sogenannte Kronenhilfsvorrichtung, mit der eine Krone vor dem Fixieren gehalten wird, um ihren Sitz relativ zu den Nachbarzähnen zu überprüfen. Dies erfolgt mittels Zahnseide, die zwischen der Krone und den Nachbarzähnen bewegt wird. Die Kronenhilfsvorrichtung ist ein Clip mit zwei Längsstreben, zwischen denen mehrere elastische Bögen mit auf die Zahnoberseiten gerichteten Spitzen verlaufen.

Es ist Aufgabe der Erfindung, die Zahnzwischenraumreinigung, insbesondere bei Personen mit eingeschränkter Fingerfertigkeit oder zahnpflegerischem Unterstützungsbedarf, zu verbessern.

Die Erfindung ist in den beiliegenden Ansprüchen definiert.

Dies wird durch eine Reinigungsschablone zu Erleichterung der Zahnzwischenraumreinigung, sei es bei natürlichen Zähnen und/oder künstlichen Zähnen, d.h. Kronen oder Brücken auf Implantaten, mit den Merkmalen des Anspruchs 1 erreicht.

Die Reinigungsschablone ist auf einen Zahnbogen mit einer hufeisenförmig verlaufenden Zahnreihe und ihm benachbartes Zahnfleisch aufsetzbar, sodass die Reinigungsschablone über die ganze Zahnreihe verläuft, weist einen bogenförmigen vestibulären Randbereich und einen bogenförmigen oralen Randbereich auf, die bei aufgesetzter Reinigungsschablone über vestibulärem beziehungsweise oralem Zahnfleisch, das zum Zahnbogen benachbart ist, verlaufen, und zumindest eine Aussparung am Ort zumindest einer Randseite eines Zahn- und/oder Implantatkronenzwischenraumes im Zahnbogen.

Solch eine Reinigungsschablone ist patientenindividuell. Ihre Form und die Form und Position der Aussparung ist an das Gebiss des Patienten, insbesondere bezüglich Form und Lage der Übergänge zwischen einem Zahn und dem Zahnfleisch angepasst.

Der Zahn- und/oder Implantatkronenzwischenraum kann ein Zwischenraum zwischen den Kronen zweier natürlicher Zähne oder zweier Implantate oder eines natürlichen Zahnes und eines Implantats sein. Der Zwischenraum kann zwischen zwei verblockten Implantatkronen sein. In diesem Fall würde er sich jedoch nicht durchgängig vom zervikalen bis zum okklusalen Rand erstrecken, sondern ist von okklusaler Seite nicht zugänglich. Von der vestibulären und/oder oralen Seite ist er zugänglich. Der Zwischenraum kann zwischen zwei verblockten Implantatkronen sein, zwischen denen noch mindestens ein Brückenglied angeordnet und mit den Implantatkronen verbunden ist. Auch dieser Zwischenraum ist von okklusaler Seite nicht zugänglich.

Die Reinigungsschablone dient zur Erleichterung der Zahn- und/oder Implantatkronenzwischenraumreinigung, die durch die Aussparung erfolgt. Eine Führung kann vorgesehen sein, um gezielt die Zwischenräume und einen Implantatkrone-Zahnfleisch-Übergang vom Zahnbelag (Plaque) zu reinigen, um diesen Entzündungsfaktor bereits im Frühstadium von Mucositis/Gingivitis und Periimplantitis gar nicht erst entstehen zu lassen.

Die Reinigungsschablone ist an den Zahnbogen der sie verwendenden Person individuell angepasst, das heißt patientenindividuell, und wird basierend auf einem, insbesondere digitalen, Abdruck angefertigt. Der digitale Abdruck kann entweder als Scan des Mundraums oder als Scan eines konventionellen Abdrucks erstellt werden. Solch ein Abdruck oder Scan des Mundraums erlaubt eine Fertigung der Reinigungsschablone als 3D-Druck oder mittels computerunterstützter Fertigung, die auch als CAM-Herstellung bezeichnet wird. Das Scannen, Konstruieren und Fertigen der Reinigungsschablone kann im Rahmen von rechnerunterstützter Konstruktion, kurz CAD, erfolgen. Ein Softwareprodukt für die Herstellung der Reinigungsschablone generiert aus Daten, die einen Abdruck oder einem Scan eines Zahnbogens repräsentieren, Daten, die die Reinigungsschablone repräsentieren, zur computerunterstützten Fertigung.

Dem Anwender wird mit der Reinigungsschablone ein Hilfsmittel an die Hand gegeben, das die Zahnzwischenraumreinigung erleichtert und die Verletzungsgefahr reduziert, da die Reinigungsschablone das Zahnfleisch jenseits des zu reinigenden Bereichs abdeckt. Die Reinigungsschablone kann nicht nur bei Personen, insbesondere mit motorischen Einschränkungen, die sich selbst die Zähne reinigen, zum Einsatz kommen, sondern auch bei Person mit zahnpflegerischem Unterstützungsbedarf, deren Zahnreinigung durch Pflegepersonal oder Angehörige übernommen wird. Die Reinigungsschablone erlaubt ohne Sicht auf die Zähne eine geführte Zahnreinigung, bei der der Blick auf die Zähne insbesondere im Hinblick auf Details entbehrlich ist. Gerade pflegebedürftige Personen können so in den Genuss der ihnen zustehenden Zahnpflege im Rahmen einer qualitativ hochwertigen Pflege, wie sie vom Gesetzgeber und den Krankenkassen vorgesehen ist, kommen.

Bei der Reinigungsschablone sind die zu reinigenden Bereiche ausgespart. Der Zahnzwischenraum ist durch die Aussparung für die Reinigung zugänglich. Bei der Zahnzwischenraumreinigung muss ein Gerät zur Reinigung der Zahnzwischenräume lediglich von Aussparung zu Aussparung, beispielsweise über Führungsschienen oder -kanäle oder durch den führenden Charakter der Aussparungen selbst, geführt werden, um damit die Randseiten der Zahnzwischenräume in den Aussparungen zu reinigen. Die Aussparung dient auch als Führung für das Reinigungsgerät. Auf diese Weise können sowohl Personen mit eingeschränkter Fingerfertigkeit, die sich die Zähne selbst reinigen, als auch pflegende Personen ohne dentalhygienische Fachausbildung mittels der Reinigungsschablone Zahnzwischenräume bei sich selbst beziehungsweise bei Personen mit pflegerischem Unterstützungsbedarf gründlich reinigen.

Bei eingesetzter Reinigungsschablone verlaufen deren vestibulärer und oraler Randbereich über dem Zahnfleisch, um dieses vor Verletzungen zu schützen. Die Reinigungsschablone hat eine Mehrzahl von Aussparungen und stegförmige Bereiche, der sich vom vestibulären Randbereich zum oralen Randbereich zwischen zwei benachbarten Aussparungen erstrecken. Der stegförmige Bereich verläuft über eine Zahnkrone, eine Implantatkrone oder erstreckt sich in einer Zahnlücke. Die Stege definieren die Seitenränder der Aussparungen und führen das Reinigungsgerät in den Zahnzwischenraum, was die Zahnzwischenraumreinigung signifikant erleichtert, da zumindest ein Anwender, der sich selbst die Zähne reinigt, keine oder nur unzureichende Sicht auf die zu reinigenden Zahnzwischenräume hat und die Zahnzwischenraumreinigung eher tastend erfolgt. Diese Vorteile haben natürlich auch Pflegekräfte oder pflegende Angehörige, für die die Sicht auf die zu reinigenden Zähne entbehrlich geworden ist.

Bei verblockten Implantaten ist die Aussparung am Ort des zervikalen Bereichs des Implantatkronenzwischenraumes. Sie erstreckt sich lediglich auf einer vestibulären Seite der Reinigungsschablone. Eine weitere, gegenüber liegende Aussparung erstreckt sich lediglich auf einer oralen Seite der Reinigungsschablone, sodass zwischen den Aussparungen ein Reinigungskanal entsteht, in den bei der Reinigung beispielsweise eine Bürste eingeführt werden kann. Derartige Aussparungen erlauben die Reinigung auch festsitzender, auf Implantaten getragenen Brücken und Versorgungen.

Die Reinigungsschablone kann eine Mehrzahl von Aussparungen haben, die sich lediglich auf einer vestibulären Seite der Reinigungsschablone erstrecken und denen jeweils eine sich lediglich auf einer oralen Seite der Reinigungsschablone erstreckende Aussparung gegenüberliegt. Solche Aussparungen sind an den Orten von Implantatkronenzwischenräumen einer Mehrzahl verblockter Implantatkronen.

Vorteilhafterweise ist die Aussparung derart ausgebildet, dass sie sich auch über zumindest einen Randbereich eines Implantatkrone-Zahnfleisch-Übergangs erstreckt, was die Reinigung dieses kritischen Bereichs ermöglicht und erleichtert.

Als Reinigungsgerät kommen beispielsweise eine Interdentalbürste, ein Zahnseidenhalter oder eine Munddusche in Frage. Auch die Verwendung einer Interdentalbürste speziell für den Einsatz mit der Reinigungsschablone ist denkbar.

Die Reinigungsschablone ist bei Mensch und Tier, insbesondere Hunden einsetzbar. Letzteres erlaubt eine verbesserte Zahnhygiene beim Haustier. Vorteilhafterweise ist in der Reinigungsschablone eine Bisssperre integriert, sodass der Mund beziehungsweise das Maul bei der Zahnzwischenraumreinigung nicht vollständig geschlossen werden kann. Solch eine Bisssperre kann als Beißblock ausgebildet sein. Die Bisssperre kann als Aufbiss ausgebildet sein, bei dem zumindest ein Teil der Zähne auf schienen- oder kappenförmige Strukturen beißen würde. Die Bisssperre schützt die Zahnzwischenräume reinigende Person vor Bissverletzungen, sei es durch Mensch oder Tier.

Nachfolgend werden einige Ausführungsbeispiele anhand der Zeichnung näher erläutert.
Figur 1 zeigt eine dreidimensionale Darstellung eines beispielhaften Gebissabdrucks in einer Aufsicht.
Figur 2 zeigt eine dreidimensionale Darstellung des Gebissabdrucks aus Figur 1 mit einem Ausführungsbeispiel einer Reinigungsschablone zu Erleichterung der Zahnzwischenraumreinigung.
Figur 3 zeigt eine dreidimensionale Darstellung des Gebissabdrucks mit der Reinigungsschablone aus Figur 2 in einer Seitenansicht.
Figur 4 zeigt eine dreidimensionale Darstellung eines weiteren beispielhaften Gebissabdrucks mit verblockten Implantaten in einer Aufsicht.
Figur 5 zeigt die Verblockung aus Figur 4 einer Seitenschnittansicht.
Figur 6 zeigt eine dreidimensionale Darstellung des Gebissabdrucks aus Figur 4 mit einem weiteren Ausführungsbeispiel einer Reinigungsschablone.
Figur 7 zeigt eine dreidimensionale Darstellung des Gebissabdrucks mit der Reinigungsschablone aus Figur 6 in einer Seitenansicht.
Figur 8 zeigt beispielhaft zwei Implantate in der Aufsicht.
Figur 9 zeigt eine dreidimensionale Darstellung des Gebissabdrucks mit der Reinigungsschablone aus den Figuren 2 und 3 mit einem Ausführungsbeispiel eines Reinigungsgeräts zur Zahnzwischenraumreinigung in einer Seitenansicht.
Figur 10 zeigt eine dreidimensionale Darstellung des Gebissabdrucks mit der Reinigungsschablone und dem Reinigungsgeräts zur Zahnzwischenraumreinigung aus Figur 9 in einer Aufsicht.
Figuren 11 bis 15 zeigen dreidimensionale Darstellungen des Gebissabdrucks mit der Reinigungsschablone aus den Figuren 2 und 3 mit weiteren Ausführungsbeispielen von Reinigungsgeräten zur Zahnzwischenraumreinigung in Aufsichtsdarstellungen.
Figuren 16 und 17 zeigen dreidimensionale Darstellungen des Gebissabdrucks mit der Reinigungsschablone aus den Figuren 6 und 7 mit Ausführungsbeispielen von Reinigungsgeräten zur Zahnzwischenraumreinigung in Aufsichtsdarstellungen.

In den Figuren sind gleiche oder funktional gleich wirkende Bauteile mit den gleichen Bezugszeichen versehen.

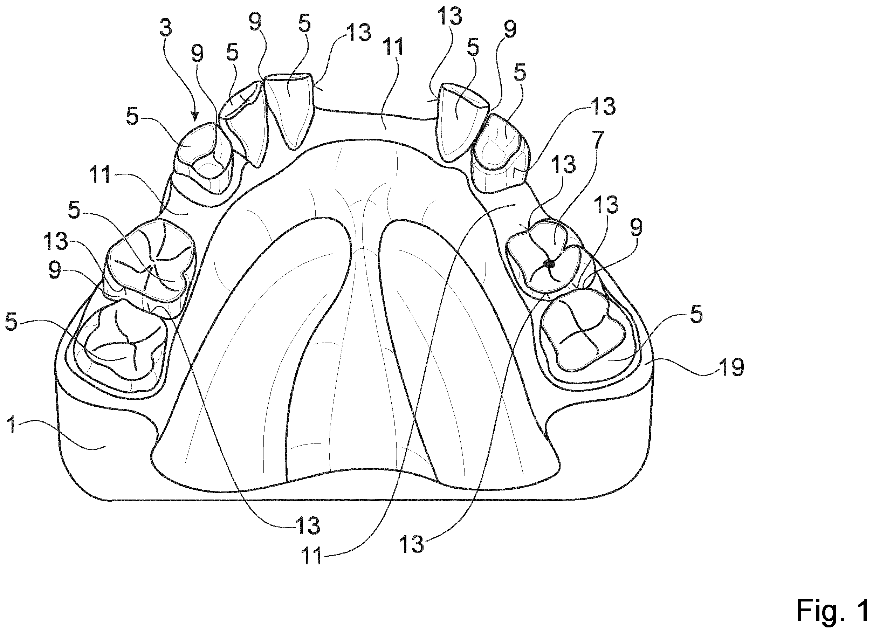

Figur 1 zeigt eine dreidimensionale Darstellung eines beispielhaften Gebissabdrucks 1 eines Unterkiefers in einer Aufsicht.

Das Gebiss umfasst einen Zahnbogen 3 mit einer hufeisenförmig verlaufenden Zahnreihe. Bei einem gesunden, normal geformten Gebiss, wie es jedoch in Figur 1 nicht dargestellt ist, hätte der Zahnbogen 16 Zähne, zwischen denen keine Lücken wären.

Der in Figur 1 dargestellte beispielhafte Zahnbogen 3 weist mehrere natürliche Zähne und ein Implantat auf. Die Zähne sind zervikal von Zahnfleisch 19 umgeben, aus dem Zahnkronen herausragen. Die Zahnkronen umfassen natürliche Zahnkronen 5 der noch vorhandenen Zähne und eine Implantatkrone 7. Zwischen den Kronen 5, 7, sind Zahnzwischenräume, die sowohl Zwischenräume 9 im Zahnschema direkt benachbarter Kronen 5, 7 als auch Zahnlücken 11 durch fehlende Zähne umfassen. Randseiten 13 eines Zahnzwischenraumes 9, 11 werden durch die Seitenflächen der Kronen 5, 7 auf beiden Seiten des Zahnzwischenraumes 9, 11, die dem Zahnzwischenraum 9, 11 zugewandt sind, definiert.

Bei im Zahnschema direkt benachbarten Kronen 5, 7 haben die Randseiten 13 des Zwischenraumes 9 nur einen geringen Abstand oder die Seitenflächen der benachbarten Kronen 5, 7 berühren sich gar. Bei einer von fehlenden Zähnen herrührenden Zahnlücke 11 haben deren Randseiten 13 einen signifikanten Abstand, der von der Anzahl der fehlenden Zähne abhängt. Der in Figur 1 gezeigte Zahnbogen 3 hat u.a. eine Zahnlücke 11 im Frontbereich.

Bei der Reinigung der Zähne und Implantate im Zahnbogen 3 sollen nicht nur vestibuläre, d.h. dem Mundvorhof zugewandte, Zahnflächen und orale, d.h. der Mundhöhle zugewandte, Zahnflächen gereinigt werden, sondern auch die Zahnflächen der Zahnzwischenräume 9, 11.

Es sei noch bemerkt, dass obgleich der Gebissabdruck 1 in Figur 1 ein Unterkieferabdruck ist, die folgenden Ausführungen nichtsdestotrotz in entsprechender Weise auch für einen Oberkiefer gelten.

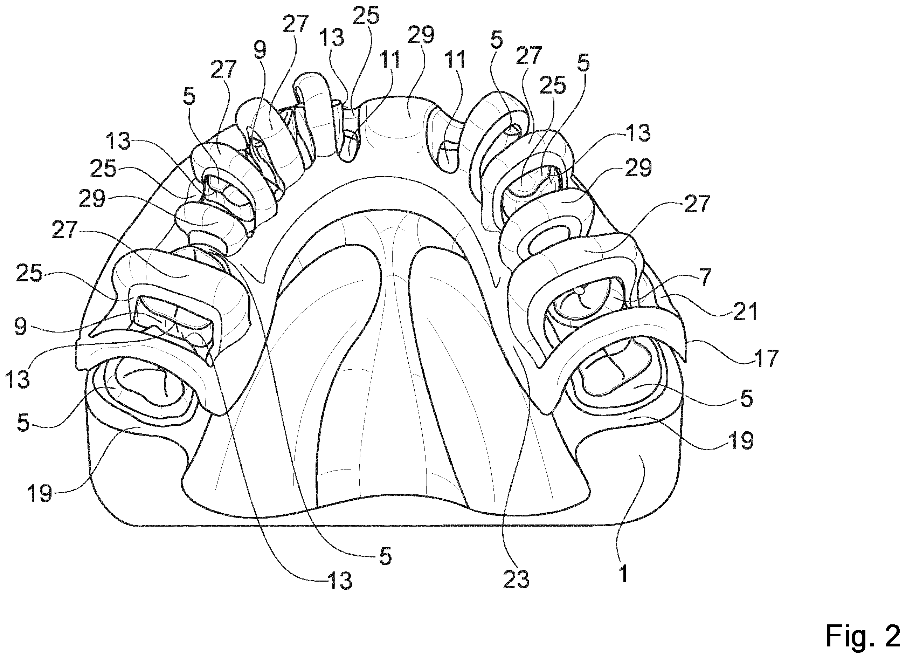

Figur 2 zeigt eine dreidimensionale Darstellung des Gebissabdrucks 1 aus Figur 1 mit einem Ausführungsbeispiel einer Reinigungsschablone 17 zur Erleichterung einer Zahnzwischenraumreinigung.

Die patientenindividuelle Reinigungsschablone 17 liegt auf dem Zahnbogen 3 und dem angrenzendem vestibulären und oralen Zahnfleisch 19 auf. Die Reinigungsschablone 17 hat einen bogenförmigen vestibulären Randbereich 21 und einen bogenförmigen oralen Randbereich 23, die über dem vestibulären und oralen Zahnfleisch 19, das zum Zahnbogen 3 benachbart ist, verlaufen. Die Reinigungsschablone 17 weist Aussparungen 25 an den Orten der Zahnzwischenräume 9, 11 oder zumindest einer ihrer Randseiten 13 auf. Bei im Zahnschema benachbarten Kronen 5, 7 verlaufen beide Randseiten 13 des Zwischenraumes 9 in derselben Aussparung 25. Bei einer Zahnlücke 11 verläuft in der Aussparung 25 nur eine von deren Randseiten 13.

Die Aussparung 25 erstreckt sich vom vestibulären Randbereich 21 zum oralen Randbereich 23, sodass die Randseiten 13 der Zahnzwischenräume 9, 11 für Reinigungsgeräte zur Zahnzwischenraumreinigung (in Figur 2 nicht dargestellt) zugänglich sind. Ein mittlerer okklusaler Bereich der Kronen 5, 7 ist von der Reinigungsschablone 17 bedeckt.

In diesem Ausführungsbeispiel ist die Reinigungsschablone 17 aus Silikon oder einem anderen Kunststoffmaterial. Sie umfasst einen durchgehenden vestibulären Bogen, der auf der vestibulären Seite des Zahnfleisches 19 benachbart zum Zahnbogen 3 verläuft, und den vestibulären Randbereich 21 ausbildet. Die Reinigungsschablone 17 umfasst ferner einen durchgehenden oralen Bogen, der auf der oralen Seite des Zahnfleisches 19 benachbart zum Zahnbogen 3 verläuft, und den oralen Randbereich 23 ausbildet. Die Reinigungsschablone 17 umfasst ferner mehrere im Wesentlichen senkrecht zum vestibulären Bogen und oralen Bogen verlaufende Stege 27, die zwischen den Zahnzwischenräumen 9, 11 über die Zahnkronen 5 und die Implantatkrone 7 verlaufen, sodass der Zahnzwischenraum 9 zweier im Zahnschema benachbarter Kronen 5, 7 zugänglich bleibt. Ferner sind Stege 29 zwischen dem vestibulären Bogen und dem oralen Bogen vorgesehen, die durch die Zahnlücken 11 verlaufen, sodass die Randseiten 13 der Zahnlücke 11 zugänglich bleiben. Diese Stege 29 können bis auf das Zahnfleisch 19 in der Zahnlücke 11 herunterreichen.

Die Aussparungen 25 zwischen den Stegen 27, 29 sind so breit, dass ein Kopf des Reinigungsgeräts (in Figur 2 nicht dargestellt) in die Aussparung 25 geführt werden kann, um die Randseiten 13 der Zahnzwischenräume 9, 11 zu reinigen. Die benachbarten Stege 27, 29 bilden den Rand der Aussparung 25, in der der Kopf des Reinigungsgeräts (in Figur 2 nicht dargestellt) geführt wird. Der vestibuläre Bogen und der orale Bogen sowie die Stege 27, 29 sind so dick, dass sie dem Kopf des Reinigungsgeräts (in Figur 2 nicht dargestellt) seitlichen Halt und Führung geben. Aus diesem Grund haben die Stege 29, die durch die Zahnlücken 11 verlaufen, eine größere Höhe als die über die Kronen 5, 7 verlaufenden Stege 27. Die okklusale Seite der Stege 29 durch die Zahnlücken 11 reicht bis an oder nahezu bis an die okklusale Seite der Stege 27 über die Kronen 5, 7 oder geringfügig darüber hinaus.

Solch eine oben beschriebene Reinigungsschablone 17 ist an das Gebiss des Patienten angepasst und wird basierend auf seinem Gebissabdruck 1 gefertigt.

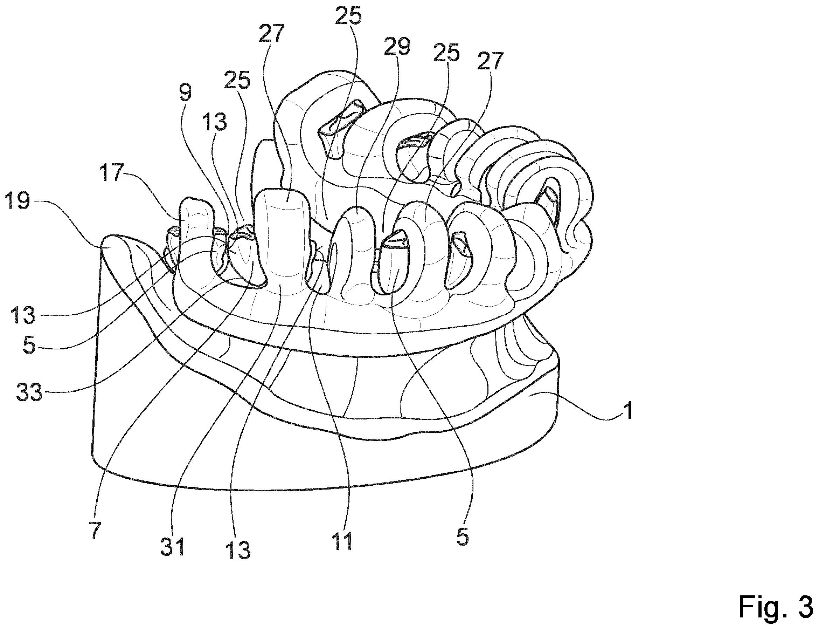

Figur 3 zeigt eine dreidimensionale Darstellung des Gebissabdrucks 1 mit der Reinigungsschablone 17 in einer Seitenansicht. Zur Vermeidung von Wiederholungen wird auf die Beschreibung in Zusammenhang mit Figur 2 verwiesen.

Figur 3 zeigt deutlich, dass die Aussparung 25 an der Implantatkrone 7 so geformt ist, dass nicht nur der Zwischenraum 9 zugänglich ist, sondern auch der Implantatkrone-Zahnfleisch-Übergang 33 zugänglich ist. Dies erlaubt eine Reinigung zwischen der dem Zahnfleisch 19 zugewandten Implantatkronenseite und dem Zahnfleisch 19, um an dieser kritischen Stelle Zahnbelag und somit Bakterien zu entfernen und einen Implantatverlust zu vermeiden.

Die Reinigungsschablone 17 dient als Schablone für die Führung des Reinigungsgeräts (in Figur 3 nicht dargestellt) zur Reinigung der Zahnzwischenräume 9, 11, wie im Folgenden in Zusammenhang mit den weiteren Figuren beschrieben wird. Solche Reinigungsgeräte können Interdentalbürsten, Mundduschen ggf. mit Absauger oder ein Airflowgerät, bei dem die Reinigung mit einem Luft-Salz-Gemisch erfolgt, sein.

Auf der Reinigungsschablone 17 können Strukturen vorgesehen sein, die als Einführungsöffnungen oder Führungen, z.B. in Form von Rillen und Schienen, für Bürsten, Mundduschen, Zahnseidenhalter dienen. Eine rillenförmige Führung 31 am Steg 27 für den Weg von Aussparung 25 zu Aussparung 25 ist in Figur 3 exemplarisch gezeigt. Die Reinigungsschablone 17 erleichtert die Führung des Reinigungsgeräts von Krone zu Krone auch ohne Sichtkontakt, speziell in Pflegesituationen, und vermeidet Verletzungen und Schmerzen bei der Reinigung durch Pflegekräfte oder Angehörige.

Obgleich im oben beschriebenen Zahnbogen 3 nur ein Implantat 7 ist, gelten obige Ausführungen auch für Zahnbögen mit mehreren im Zahnschema benachbarten Implantaten, die nicht verblockt sind, d.h. separate Zahnkronen haben.

Bei der Zahnzwischenraumreinigung wird die Reinigungsschablone 17, die in den Figuren stets in Zusammenhang mit dem Gebissabdruck 1 dargestellt wird, auf den abgeformten Zahnbogen des Patienten aufgesetzt. Obgleich die Darstellung in den Figuren sich auf den Unterkiefer konzentriert, ist die Erfindung natürlich nicht drauf geschränkt, sondern kann in entsprechender Weise auch beim Oberkiefer eingesetzt werden.

Die vestibulären und oralen Zahnflächen werden in einem weiteren Reinigungsschritt ohne Reinigungsschablone 17, vorzugsweise mit einer konventionellen Zahnbürste, gereinigt.

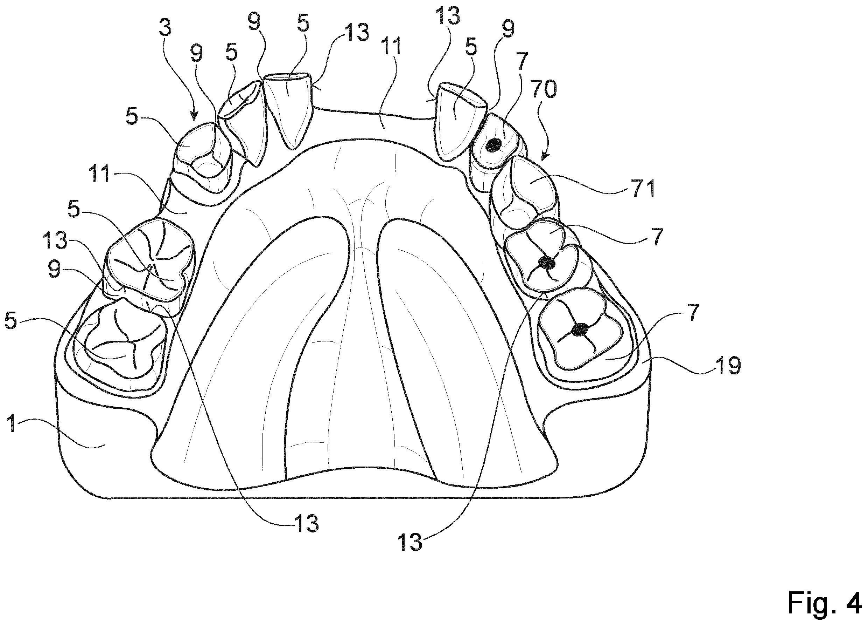

Figur 4 zeigt eine dreidimensionale Darstellung eines weiteren beispielhaften Gebissabdrucks in einer Aufsicht. Um Wiederholungen zu vermeiden konzentriert sich die Beschreibung auf Unterschiede zum in Figur 1 gezeigten Ausführungsbeispiel.

Der in Figur 4 dargestellte Zahnbogen 3 weist eine Verblockung 70 mit mehreren Implantaten auf, die über den aufgesetzten Zahnersatz verbunden sind. Durch die Verblockung 70 kann eine höhere Stabilität des Zahnersatzes mit reduzierter Belastung erreicht werden, da seitliche Belastungen verteilt werden. Die Verblockung 70 weist im dargestellten Ausführungsbeispiel drei Implantate mit verblockten Implantatkronen 7 auf, wobei zwischen zweien ein kronenförmiges Brückenglied 71 angeordnet und mit den benachbarten Implantatkronen 7 verbunden ist.

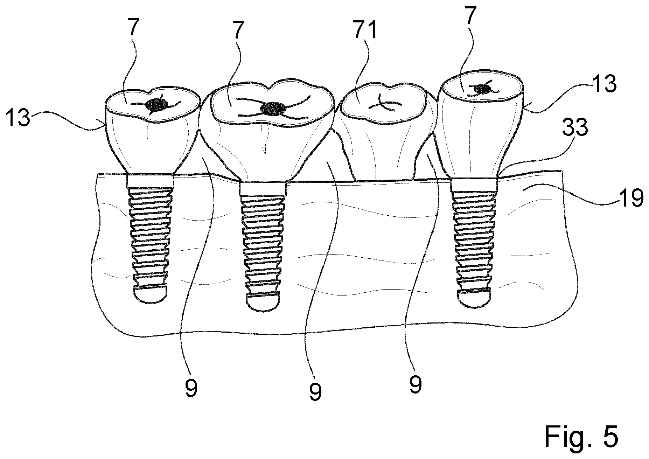

In Figur 5 ist die beschriebene Verblockung 70 in der Seitenschnittansicht dargestellt. Wegen der Verbindung der verblockten Implantatkronen 7 und des Brückenglieds 71, ist eine Durchführung eines Bürstenkopfes oder Zahnseide (in Figur 5 nicht dargestellt) von okklusaler Seite bis zum Zahnfleisch 19 nicht möglich. Nichtsdestotrotz ist eine Reinigung der Zahnzwischenräume 9 an der zervikalen Seite der Kronen 7 und des Brückenglieds 71 sowie des Implantatkrone-Zahnfleisch-Übergangs 33 erforderlich.

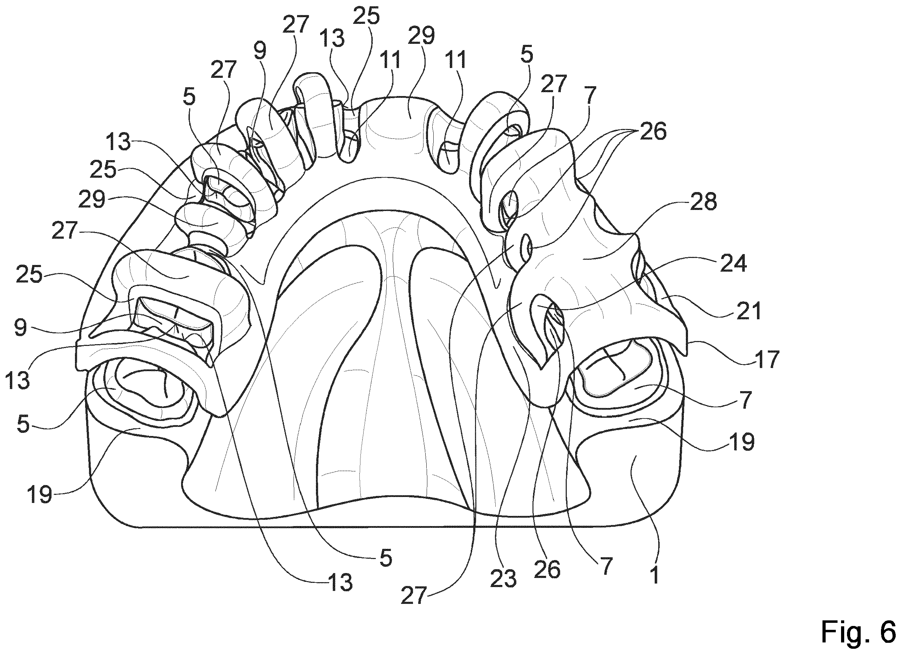

Figur 6 zeigt eine dreidimensionale Darstellung des Gebissabdrucks aus Figur 4 mit einem Ausführungsbeispiel einer Reinigungsschablone 17, die auch die Reinigung der Zwischenräume 9 der verblockten Implantatkronen 7 und des Brückenglieds 71 ermöglicht. Um Wiederholungen zu vermeiden, konzentriert sich die Beschreibung auf Unterschiede zum in Figur 2 gezeigten Ausführungsbeispiel.

Die Reinigungsschablone 17 weist an den Orten der zervikalen Bereiche der Implantatkronenzwischenräume 9 Aussparungen 26 auf, die sich allerdings lediglich auf einer vestibulären Seite der Reinigungsschiene 17 erstrecken. Ihnen liegt jeweils eine sich lediglich auf einer oralen Seite der Reinigungsschiene 17 erstreckende Aussparung 26 gegenüber. Die okklusalen Bereiche der verblockten Implantatkronen 7 und des Brückengliedes sind von einem flächigen Bereich 28 der Reinigungsschablone 17 bedeckt, sodass kein Zugang von okklusaler Seite zu den Zwischenräumen der verblockten Implantatkronen 7 besteht. Stege 27 verlaufen vom vestibulären Bogen und vom oralen Bogen zum flächigen Bereich 28 zwischen den Aussparungen 26.

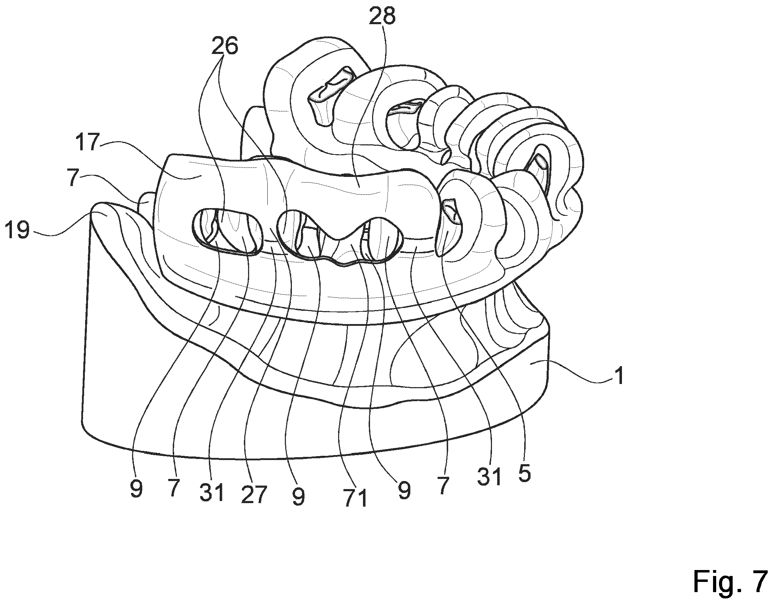

Figur 7 zeigt eine dreidimensionale Darstellung des Gebissabdrucks 1 mit der Reinigungsschablone 17 aus Figur 6 in einer Seitenansicht. Zur Vermeidung von Wiederholungen wird auf die Beschreibung in Zusammenhang mit Figur 6 verwiesen.

Die Aussparungen 26 im Bereich der verblockten Implantatkronen 7 und des Brückengliedes 71 sind derart ausgebildet, dass ein Kopf des Reinigungsgeräts (in Figur 7 nicht dargestellt) in die Aussparung 26 geführt werden kann, um die Zwischenräume 9 zu reinigen.

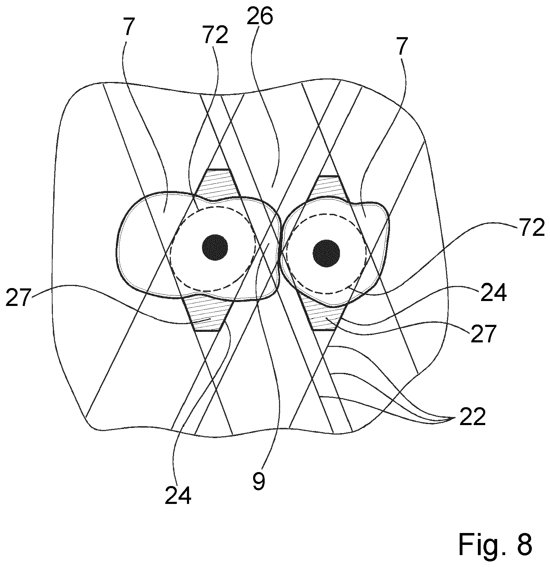

Figur 8 zeigt beispielhaft zwei Implantate 7 in der Aufsicht, anhand derer ein Aspekt der Reinigung erläutert wird.

Ein Rand 24 der Aussparung 26 ist angeschrägt, um eine Implantatkronenbasis 72 am zervikalen Rand der Implantatkrone 7 zu reinigen. Der angeschrägte Rand 24 erlaubt nicht nur einen Kopf eines Reinigungsmittels, beispielsweise einen Bürstenkopf, schrägt in die Aussparung 26 und den Zahnzwischenraum 9 einzuführen, sondern gibt eine Einführungsrichtung gar vor, wenn der Kopf am Rand 24 entlang gleitend eingeführt wird. Die Schräge des Rands 24 ist so gewählt, dass der Kopf die Implantatkronen 7 an ihrer Basis reinigt. Der entsprechende maximale Winkel ist durch die Linien 22 dargestellt.

Die folgenden Figuren veranschaulichen die Reinigung in Zusammenhang mit der in den Figuren 2 und 3 gezeigten Reinigungsschablone.

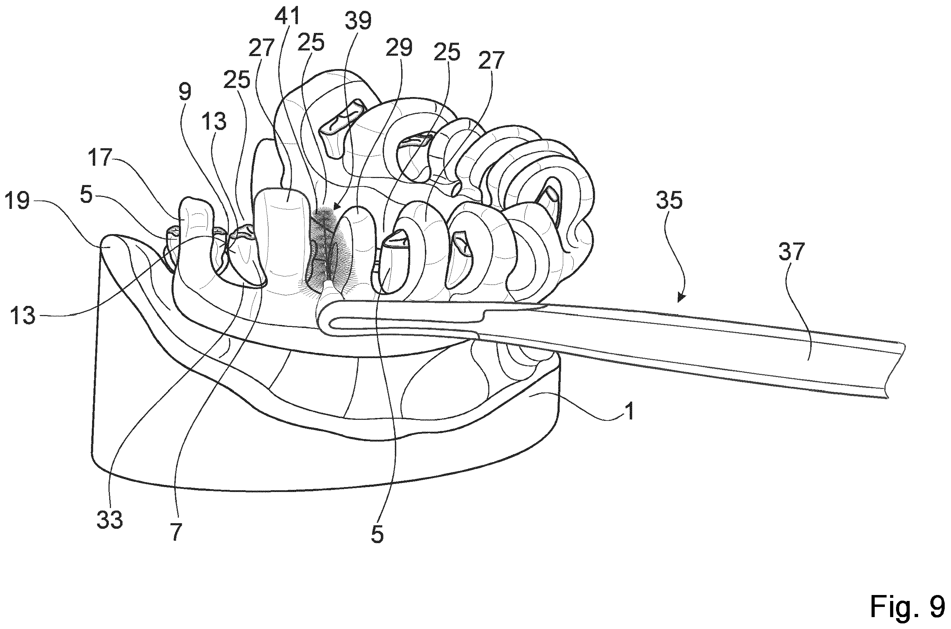

Figur 9 zeigt eine dreidimensionale Darstellung des Gebissabdrucks 1 mit der Reinigungsschablone 17 aus Figur 3 mit einem Ausführungsbeispiel eines Reinigungsgeräts zur Zahnzwischenraumreinigung in der Seitenansicht. Hinsichtlich der Reinigungsschablone 17 wird auf die Beschreibung in Zusammenhang mit den Figuren 2 und 3 verwiesen.

Das Reinigungsgerät ist ein Ausführungsbeispiel einer Interdentalbürste 35 mit einem Griff 37 um Halten und Führen der Interdentalbürste 35 und einem winklig zum Griff angebrachten Bürstenkopf 39. Der Bürstenkopf 39 umfasst zwischen zwei verdrillten Drähten eingeschobene Borsten 41, die von den Drähten gehalten werden. Solche Bürstenköpfe 39 sind in verschiedenen Durchmessern erhältlich und werden abhängig von der Breite des zu reinigenden Zahnzwischenraumes 9, 11 ausgewählt. Ein größerer Durchmesser geht mit längeren Borsten 41 einher. Es ist nicht ungewöhnlich, dass bei der Reinigung desselben Gebisses Bürstenköpfe 39 mit unterschiedlichen Durchmessern zum Einsatz kommen.

In Figur 9 ist ein breiter Bürstenkopf 39 gezeigt, der für breitere Zwischenräume 9 oder Zahnlücken 11 verwendet wird. Er hat eine konische, sich zur Kopfspitze verjüngende Form. Konische Bürstenköpfen 39 können gut im Backenzahnbereich eingesetzt werden. Die spitzenseitigen Borstentypen sind härter, um eine gute Reinigungswirkung auch im engeren Bereich des Zahnzwischenraumes 9, 11 zu erreichen.

Die Darstellung in Figur 9 zeigt exemplarisch den in eine Aussparung 25 der Reinigungsschablone 17 eingeführten Bürstenkopf 39. Bei der Reinigung wird der Bürstenkopf 39 in eine Aussparungen 25 der Reinigungsschablone 17 eingeführt und dort im Zahnzwischenraum 9, 11 oder an dessen Seitenrand 13 hin und her bewegt. Um den Bürstenkopf 39 zur nächsten Aussparung 25 zu führen, wird er über den Steg 27, 29 gezogen und gleitet in die nächste Aussparung 25 und wird dort im Zahnzwischenraum 9, 11 oder an dessen Seitenrand 13 hin und her bewegt.

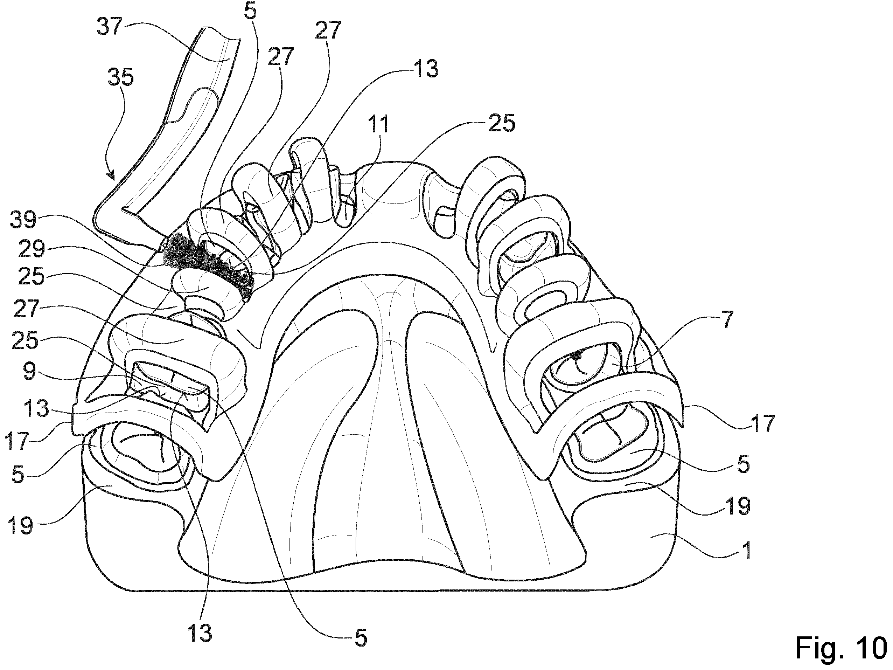

Figur 10 zeigt eine dreidimensionale Darstellung des Gebissabdrucks 1 mit der Reinigungsschablone 17 und der Interdentalbürste 35 aus Figur 9 in einer Aufsicht. Zur Vermeidung von Wiederholungen wird auf die Beschreibung in Zusammenhang mit Figur 9 verwiesen.

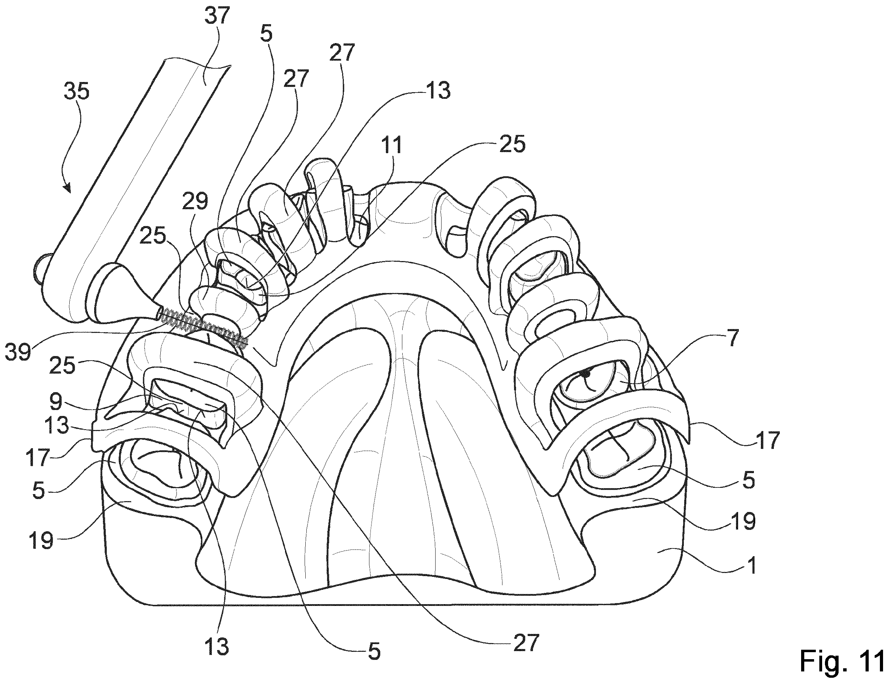

Figur 11 zeigt eine dreidimensionale Darstellung des Gebissabdrucks 1 mit der Reinigungsschablone 17 mit einem weiteren Ausführungsbeispiel eines Reinigungsgeräts zur Zahnzwischenraumreinigung in der Aufsicht. Zur Vermeidung von Wiederholungen konzentriert sich den Beschreibung auf Unterschiede zum vorherigen Ausführungsbeispiel.

Das Reinigungsgerät ist ein weiteres Ausführungsbeispiel einer Interdentalbürste 35 mit einem Griff 37 ähnlich dem einer konventionellen Zahnbürste zum Halten und Führen der Interdentalbürste 35 und einem winklig zum Griff angebrachten Bürstenkopf 39. Im Gegensatz zur zuvor beschriebenen Interdentalbürste 35 hat die in Figur 11 gezeigte Interdentalbürste 35 einen entlang des Bürstenkopfes 39 gleichbleibenden, eher geringen Durchmesser, der für schmalere Zahnzwischenräume geeignet ist.

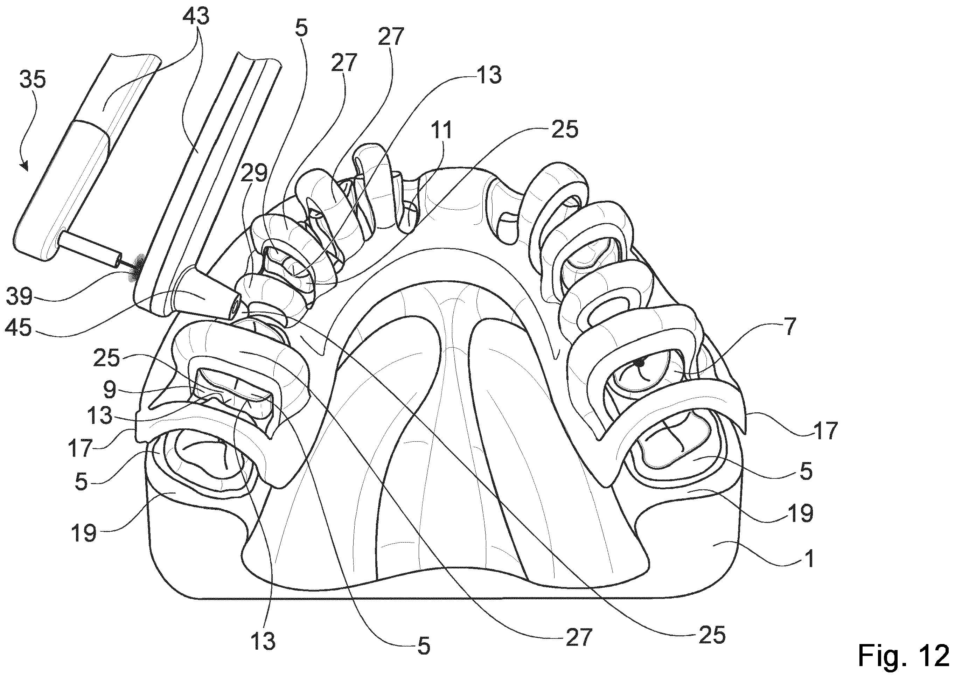

Figur 12 zeigt eine dreidimensionale Darstellung des Gebissabdrucks 1 mit der Reinigungsschablone 17 und mit einem weiteren Ausführungsbeispiel eines Reinigungsgeräts zur Zahnzwischenraumreinigung in der Aufsicht. Zur Vermeidung von Wiederholungen konzentriert sich die Beschreibung auf Unterschiede zu den vorherigen Ausführungsbeispielen.

Das Reinigungsgerät ist ein weiteres Ausführungsbeispiel einer Interdentalbürste 35 und umfasst einen Griffbereich mit zwei am Griffende (nicht dargestellt) verbundenen Schenkeln 43, die zusammenpressbar sind. An der Spitze des den Zähnen zugewandten Schenkels 43 ist ein rechtwinklig aufgebrachter Aufsatz in Form einer konischen Hülse 45, deren sich verjüngender Bereich vom Schenkel 43 abgewandt ist. An der Spitze des von den Zähnen abgewandten Schenkels 43 ist ein Bürstenkopf 39, der durch die Hülse 45 führbar ist. Mit dem Zusammendrücken der Schenkel 43 wird der Bürstenkopf 39 in die Hülse 45 bewegt, sodass die Bürstenkopfspitze an der Hülsenspitze heraustritt und in den Zahnzwischenraum 9, 11 geführt wird. Diese zangenförmige Interdentalbürste 35 erleichtet das Einführen des Bürstenkopfes 39 in den Zahnzwischenraum 9,11, da zunächst die Hülsenspitze auf den Zahnzwischenraum 9, 11 gesetzt wird und dann durch Zusammenpressen der Schenkel 43 der Bürstenkopf 39 zielgerichtet in den Zahnzwischenraum 9, 11 geführt wird.

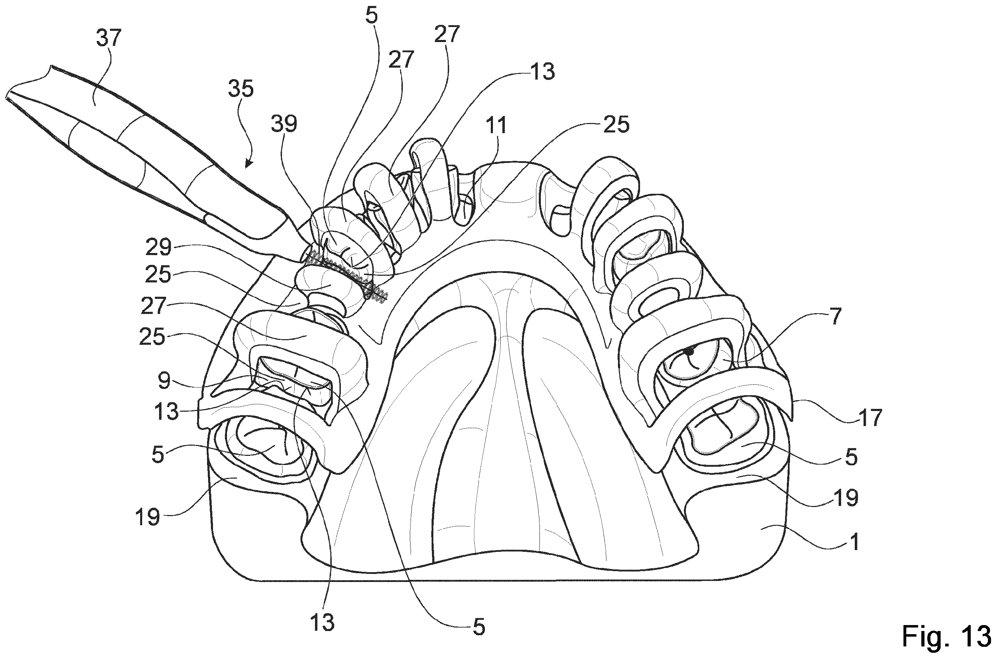

Figur 13 zeigt eine dreidimensionale Darstellung des Gebissabdrucks 1 mit der Reinigungsschablone 17 und mit einem weiteren Ausführungsbeispiel eines Reinigungsgeräts zur Zahnzwischenraumreinigung in der Aufsicht. Zur Vermeidung von Wiederholungen konzentriert sich die Beschreibung auf Unterschiede zu den vorherigen Ausführungsbeispielen.

Das Reinigungsgerät ist eine Interdentalbürste 35 mit einem Griff 37 und einem Bürstenkopf 39, der in Griffrichtung angeordnet ist. Der Griff 37 ist im Vergleich zum Bürstenkopf 39 relativ dick, was die Handhabung erleichtert. Diese Anordnung des Bürstenkopfes 39 ist besonderes zur Reinigung der Frontzähne geeignet. Der gezeigt Bürstenkopf 39 hat einen entlang des Bürstenkopfes 39 gleichbleibenden Durchmesser. Alternativ kann der Bürstenkopf 39 konisch geformt sein (in Figur 13 nicht dargestellt).

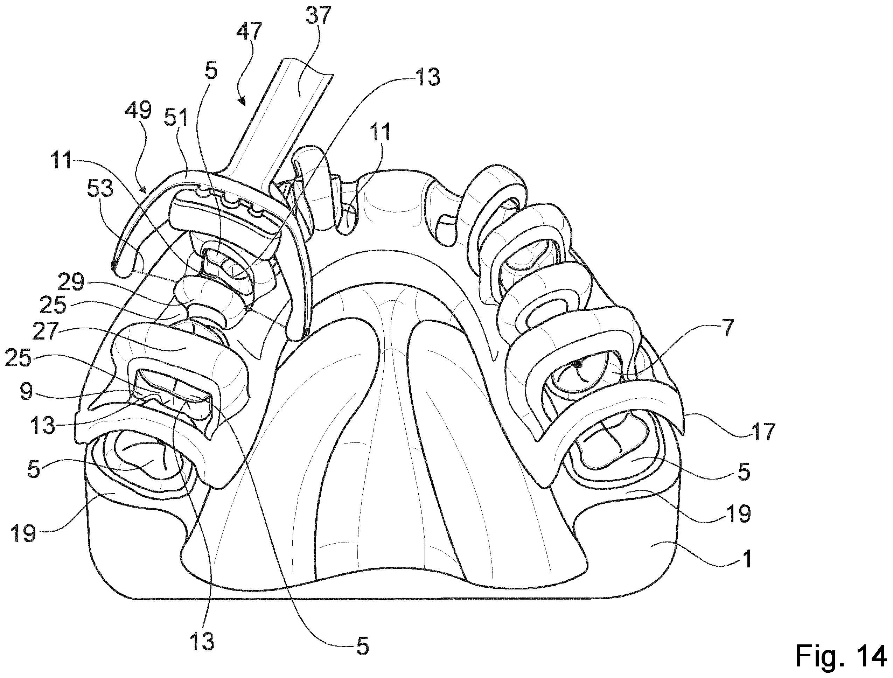

Figur 14 zeigt eine dreidimensionale Darstellung des Gebissabdrucks 1 mit der Reinigungsschablone 17 und mit einem weiteren Ausführungsbeispiel eines Reinigungsgeräts zur Zahnzwischenraumreinigung in der Aufsicht. Zur Vermeidung von Wiederholungen konzentriert sich die Beschreibung auf Unterschiede zu den vorherigen Ausführungsbeispielen.

Das Reinigungsgerät ist ein Zahnseidenhalter 47 mit einem Griff 37 und einem Halterkopf 49, der einen Bogen 51 aufweist, zwischen deren Spitzen Zahnseide 53 gespannt ist. Der Bogen 51 mit der Zahnseide 53 ist auswechselbar. Die Zahnseide 53 verläuft winklig, vorzugsweise senkrecht, zum Griff 37 und wird in den Zahnzwischenraum 9, 11 eingeführt, indem die Bogenspitzen auf der vestibulären und oralen Seite des Zahnzwischenraums 9, 11 in zervikaler Richtung bewegt werden. Zahnseide 53 erlaubt die Reinigung enger Zahnzwischenräume und insbesondere des Implantatkrone-Zahnfleisch-Übergangs.

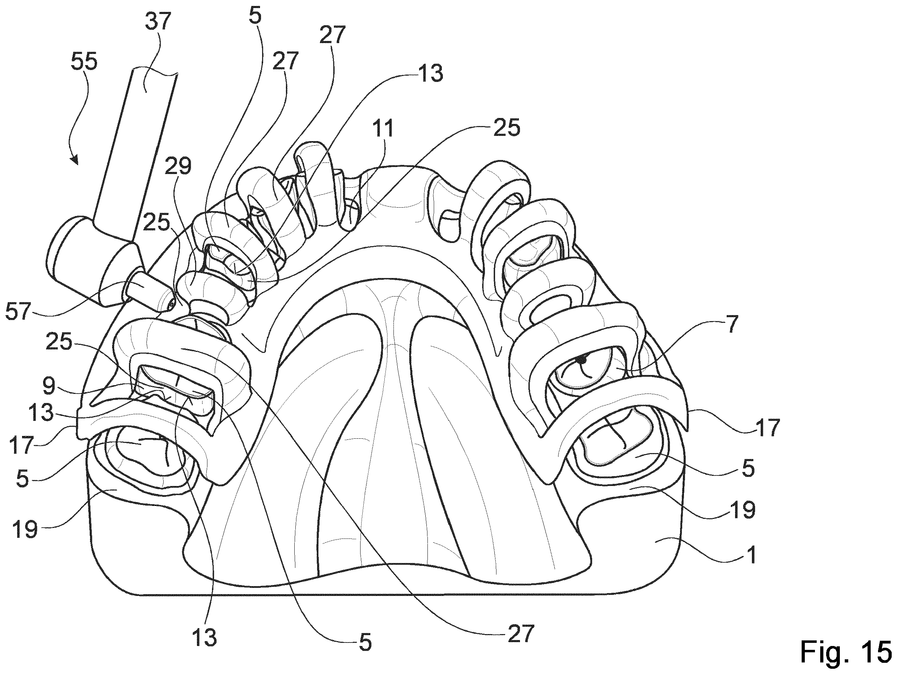

Figur 15 zeigt eine dreidimensionale Darstellung des Gebissabdrucks 1 mit der Reinigungsschablone 17 und mit einem weiteren Ausführungsbeispiel eines Reinigungsgeräts zur Zahnzwischenraumreinigung in einer Aufsicht. Zur Vermeidung von Wiederholungen konzentriert sich die Beschreibung auf Unterschiede zu den vorherigen Ausführungsbeispielen.

Das Reinigungsgerät ist eine Munddusche 55 mit einem Griff 37 zum Halten und Führen des Reinigungsgeräts und einer Düse 57, aus der Wasser winklig zur Griffrichtung austritt. Dieses Reinigungsgerät erlaubt auch die Massage des Zahnfleisches 19 und die Reinigung der Mundhöhle. Die Munddusche 55 als Wasserstrahlgerät entfernt lose aufliegende Beläge, nicht aber eher fest haftende bakterielle Zahnbeläge oder Zahnstein. Die Munddusche 55 arbeitet mit einem Wasserstrahl, der Speisereste zwischen den Zähnen heraus spülen kann. Sie kann bei der Zahnpflege eine sinnvoll Ergänzung zur Zahnbürste und zur Zahnseide oder Interdentalbürste sein.

Bis auf die Zahnseide können die zuvor erwähnten Reinigungsmittel auch für die Aussparung eingesetzt werden, die keinen okklusalen Zugang haben, und in die sie seitlich eingeführt werden. Solche Aussparungen wurden in Zusammenhang mit den Figuren 6 und 7 beschrieben. Die folgenden Figuren veranschaulichen die Reinigung in Zusammenhang mit der in den Figuren 6 und 7 gezeigten Reinigungsschablone für noch einige Aspekte. Um Wiederholungen zu vermeiden, wird lediglich auf Unterschiede zu den zuvor beschriebenen Ausführungsbeispielen eingegangen.

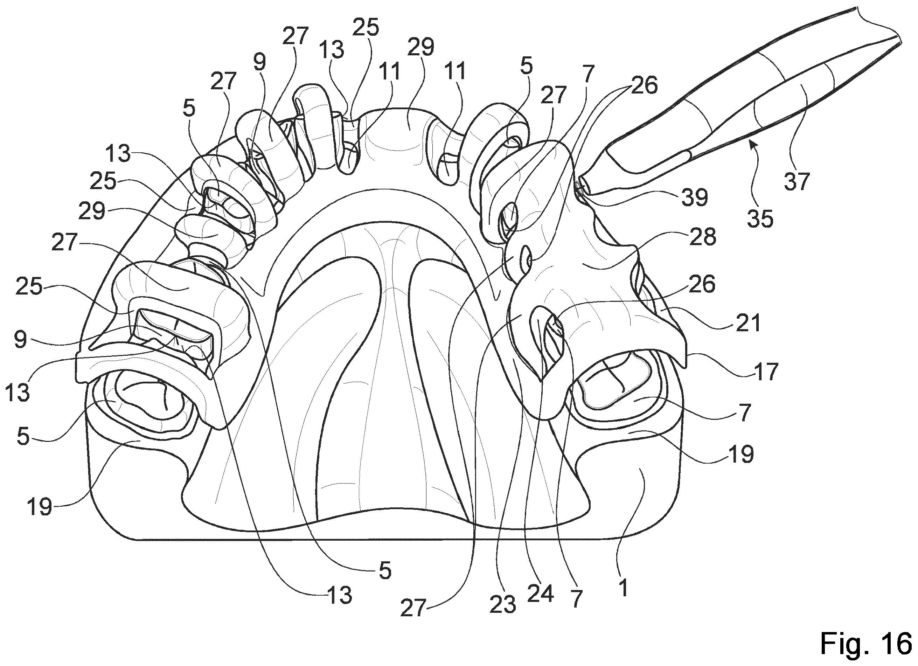

Figur 16 zeigt die Reinigung eines Zwischenraumes 9 ohne okklusalen Zugang durch eine Aussparung 26 mit einem Ausführungsbeispiel einer Interdentalbürste 35, wie der in Zusammenhang mit Figur 13 beschriebenen. Solche eine Interdentalbürste 35 lässt sich besonders gut entlang des angeschrägten Rands der Aussparung 26 führen, wie er in Zusammenhang mit Figur 8 beschrieben worden ist.

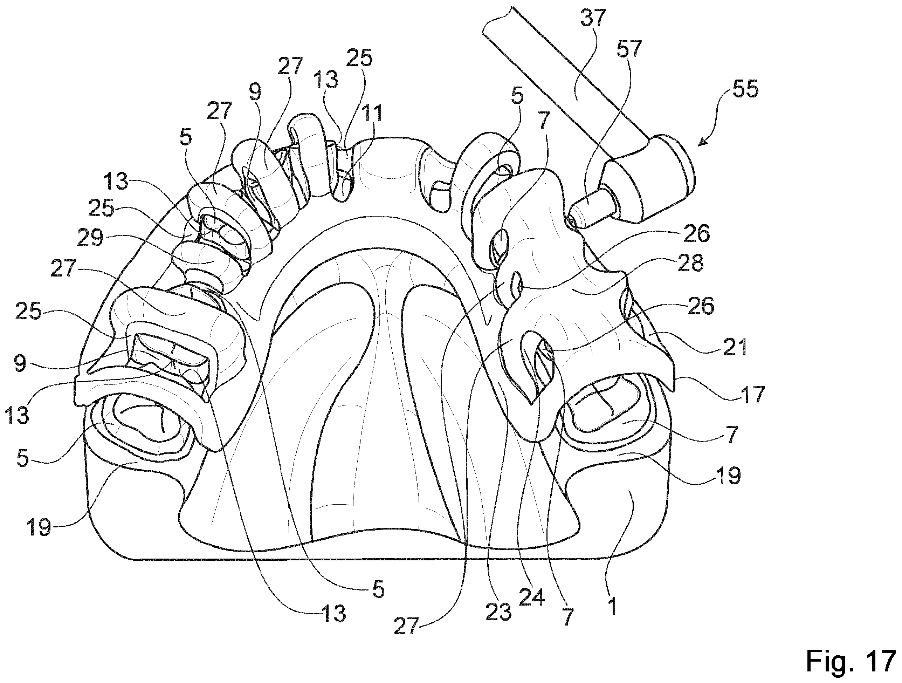

Figur 17 zeigt eine dreidimensionale Darstellung des Gebissabdrucks 1 mit der Reinigungsschablone 17 und mit einem weiteren Ausführungsbeispiel eines Reinigungsgeräts zur Zahnzwischenraumreinigung in einer Aufsicht. Zur Vermeidung von Wiederholungen konzentriert sich die Beschreibung auf Unterschiede zu den vorherigen Ausführungsbeispielen. Das Reinigungsgerät ist eine Munddusche wie bereits in Zusammenhang mit Figur 15 beschrieben.

Obenstehende Ausführungen gelten auch für eine Reinigungsschablone für Tiere, insbesondere Hunde, die an das Tiergebiss angepasst ist.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen der Ansprüche in mancherlei Weise abwandelbar.

### Liste der Bezugszeichen:

- 1: Gebissabdruck
- 3: Zahnbogen
- 5: Zahnkrone
- 7: Implantatkrone
- 9: Zwischenraum
- 11: Zahnlücke
- 13: Randseite
- 17: Reinigungsschablone
- 19: Zahnfleisch
- 21: vistubulärer Randbereich
- 22: Linie
- 23: oraler Randbereich
- 24: Rand
- 25: Aussparung
- 26: Aussparung
- 27: Steg
- 28: flächiger Bereich
- 29: Steg durch eine Zahnlücke
- 31: Führung
- 33: Implantatkrone-Zahnfleisch-Übergang
- 35: Interdentalbürste
- 37: Griff
- 39: Bürstenkopf
- 41: Borsten
- 43: Schenkel
- 45: Hülse
- 47: Zahnseidenhalter
- 49: Halterkopf
- 51: Bogen
- 53: Zahnseide
- 55: Munddusche
- 57: Düse
- 70: Verblockung
- 71: Brückenglied
- 72: Implantatkronenbasis

## Patentansprüche

1. Reinigungsschablone (17) zur Erleichterung einer Zahnzwischenraumreinigung,
die auf einen Zahnbogen (3) mit einer hufeisenförmig verlaufenden Zahnreihe und ihm benachbartes Zahnfleisch (19) aufsetzbar ist, sodass die Reinigungsschablone (17) über die ganze Zahnreihe verläuft,
wobei die Reinigungsschablone (17) einen bogenförmigen vestibulären Randbereich (21) und einen bogenförmigen oralen Randbereich (23) aufweist, die bei aufgesetzter Reinigungsschablone (17) über vestibulärem beziehungsweise oralem Zahnfleisch (19), das zum Zahnbogen (3) benachbart ist, verlaufen,
und die Reinigungsschablone (17) zumindest eine Aussparung (25, 26) am Ort zumindest einer Randseite (13) eines Zahn- und/oder Implantatkronenzwischenraumes (9, 11) im Zahnbogen (3) aufweist.

2. Reinigungsschablone nach Anspruch 1,
wobei die Aussparung (25, 26) am Ort zumindest des zervikalen Bereichs des Zahn- und/oder Implantatkronenzwischenraumes (9, 11) ist.

3. Reinigungsschablone nach Anspruch 1 oder 2, deren Aussparung (25) sich vom vestibulären Randbereich (21) zum oralen Randbereich (23) entlang des Verlaufs der zumindest einen Randseite (13) des Zahn- und/oder Implantatkronenzwischenraumes (9, 11) erstreckt.

4. Reinigungsschablone (17) nach Anspruch 3,
wobei die Aussparung (25) derart ausgebildet ist, dass sie sich auch über zumindest einen Randbereich eines Implantatkrone-Zahnfleisch-Übergangs (33) erstreckt.

5. Reinigungsschablone (17) nach Anspruch 1 oder 2, deren Aussparung (26) sich lediglich auf einer vestibulären Seite der Reinigungsschablone (17) erstreckt.

6. Reinigungsschablone (17) nach Anspruch 5, bei der sich eine weitere, gegenüberliegende Aussparung (26) lediglich auf einer oralen Seite der Reinigungsschablone (17) erstreckt.

7. Reinigungsschablone (17) nach einem der vorhergehenden Ansprüche, wobei ein Rand (24) der Aussparung (25, 26) angeschrägt ist.

8. Reinigungsschablone (17) nach einem der vorhergehenden Ansprüche, mit einer Mehrzahl von Aussparungen (25) jeweils am Ort zumindest einer Randseite (13) eines Zahn- und/oder Implantatkronenzwischenraumes (9, 11), die sich jeweils vom vestibulären Randbereich (21) zum oralen Randbereich (23) entlang des Verlaufs der zumindest einen Randseite (13) des Zahn- und/oder Implantatkronenzwischenraumes (9, 11) erstrecken und mit zumindest einem stegförmigen Bereich (27, 29), der sich vom vestibulären Randbereich (21) zum oralen Randbereich (23) zwischen zwei benachbarten Aussparungen (25) erstreckt.

9. Reinigungsschablone (17) nach Anspruch 8,
deren stegförmiger Bereich (27, 29) ausgebildet ist, sich über eine Zahnkrone (5) oder eine Implantatkrone (7) oder in einer Zahnlücke (11) zu erstrecken.

10. Reinigungsschablone (17) nach einem der vorhergehenden Ansprüche, mit einer Mehrzahl von Aussparungen (26), die sich lediglich auf einer vestibulären Seite der Reinigungsschablone (17) erstrecken und denen jeweils eine sich lediglich auf einer oralen Seite der Reinigungsschablone (17) erstreckende Aussparung (26) gegenüberliegt, wobei die Aussparungen (26) an Orten von Rändern von Implantatkronenzwischenräumen (9) einer Mehrzahl verblockter Implantatkronen (7) sind.

11. Reinigungsschablone (17) nach einem der vorhergehenden Ansprüche, die an den Zahnbogen (3) individuell angepasst ist.

12. Reinigungsschablone (17) nach einem der vorhergehenden Ansprüche, deren Aussparung (25, 26) derart ausgebildet ist, dass der Zahnzwischenraum (9, 11) einem Reinigungsgerät für Zahnzwischenräume zugänglich ist.

13. Reinigungsschablone (17) nach einem der vorhergehenden Ansprüche, deren Aussparung (25, 26) derart ausgebildet ist, dass zumindest der Randbereich des Implantatkrone-Zahnfleisch-Übergangs (33) einem dafür vorgesehenen Reinigungsgerät zugänglich ist.

14. Reinigungsschablone (17) nach Anspruch 12 oder 13,
die ein Mittel zur Führung (31) des Reinigungsgeräts aufweist.

15. Reinigungsschablone (17) nach einem der Ansprüche 12 bis 14,
wobei das Reinigungsgerät eines aus der Gruppe mit Interdentalbürste (35), Zahnseidenhalter (47), Munddusche (55) und Airflowgerät ist.

16. Verfahren zur Herstellung einer Reinigungsschablone (17) nach einem der Ansprüche 1 bis 15, bei dem basierend auf einem Abdruck und/oder einem Scan eines Zahnbogens (3) die Reinigungsschablone (17) im Rahmen computerunterstützter Fertigung gedruckt oder gefräst wird.

17. Softwareprodukt, umfassend Befehle, die bei der Ausführung des Verfahrens nach Anspruch 16 die Herstellung einer Reinigungsschablone (17) nach einem der Ansprüche 1-15 bewirken, wobei das Softwareprodukt ausgebildet ist, aus Daten, die einen Abdruck oder einen Scan eines Zahnbogens (3) repräsentieren, Daten zur computerunterstützten Fertigung der Reinigungsschablone zu generieren.

## Claims

1. Cleaning template (17) for facilitating interdental cleaning,
which can be placed on a dental arch (3) with a horseshoe-shaped row of teeth and on adjacent gums (19), so that the cleaning template (17) extends over the entire row of teeth,
wherein the cleaning template (17) comprises an arc-shaped vestibular edge region (21) and an arc-shaped oral edge region (23) which, when the cleaning template (17) is in place, extend over vestibular and oral gums (19), respectively, which are adjacent to the dental arch (3),
and the cleaning template (17) comprises at least one cutout (25, 26) located at at least one edge side (13) of a tooth and/or implant crown interspace (9, 11) in the dental arch (3).

2. Cleaning template according to claim 1,
wherein the cutout (25, 26) is located at least in the cervical region of the tooth and/or implant crown interspace (9, 11).

3. Cleaning template according to claim 1 or claim 2, the cutout (25) of which extends from the vestibular edge region (21) to the oral edge region (23) along the extent of the at least one edge side (13) of the tooth and/or implant crown interspace (9, 11).

4. Cleaning template (17) according to claim 3,
wherein the cutout (25) is designed such that it also extends over at least one edge region of an implant crown-gum transition (33).

5. Cleaning template (17) according to claim 1 or claim 2, the cutout (26) of which extends only on a vestibular side of the cleaning template (17).

6. Cleaning template (17) according to claim 5, in which a further, opposite cutout (26) extends only on an oral side of the cleaning template (17).

7. Cleaning template (17) according to any of the preceding claims, wherein an edge (24) of the cutout (25, 26) is beveled.

8. Cleaning template (17) according to any of the preceding claims, comprising a plurality of cutouts (25) that are each located at at least one edge side (13) of a tooth and/or implant crown interspace (9, 11), which cutouts each extend from the vestibular edge region (21) to the oral edge region (23) along the extent of the at least one edge side (13) of the tooth and/or implant crown interspace (9, 11), and comprising at least one bridge-shaped region (27, 29) which extends from the vestibular edge region (21) to the oral edge region (23) between two adjacent cutouts (25).

9. Cleaning template (17) according to claim 8,
the bridge-shaped region (27, 29) of which is designed to extend over a tooth crown (5) or an implant crown (7) or in a tooth gap (11).

10. Cleaning template (17) according to any of the preceding claims, comprising a plurality of cutouts (26) that extend only on a vestibular side of the cleaning template (17) and are each opposite a cutout (26) that extends only on an oral side of the cleaning template (17), wherein the cutouts (26) are located at edges of implant crown interspaces (9) of a plurality of splinted implant crowns (7).

11. Cleaning template (17) according to any of the preceding claims, which is individually adapted to the dental arch (3).

12. Cleaning template (17) according to any of the preceding claims, the cutout (25, 26) of which is designed such that the interdental space (9, 11) is accessible to a cleaning device for interdental spaces.

13. Cleaning template (17) according to any of the preceding claims, the cutout (25, 26) of which is designed such that at least the edge region of the implant crown-gum transition (33) is accessible to a cleaning device provided for this purpose.

14. Cleaning template (17) according to claim 12 or claim 13,
which comprises a means for guiding (31) the cleaning device.

15. Cleaning template (17) according to any of claims 12 to 14,
wherein the cleaning device is one of the group comprising an interdental brush (35), a dental floss holder (47), an oral irrigator (55) and an airflow device.

16. Method for producing a cleaning template (17) according to any of claims 1 to 15, in which the cleaning template (17) is printed or milled using computer-aided manufacturing, based on an impression and/or a scan of a dental arch (3).

17. Software product comprising instructions which, when the method according to claim 16 is carried out, cause a cleaning template (17) according to any of claims 1-15 to be produced, wherein the software product is designed to generate data for the computer-aided manufacture of the cleaning template from data representing an impression or a scan of a dental arch (3).

## Revendications

1. Guide de nettoyage (17) destiné à faciliter un nettoyage de l'espace interdentaire,
lequel guide peut être placé sur une arcade dentaire (3) comportant une rangée de dents s'étendant comme un fer à cheval et une gencive (19) qui est adjacente à celle-ci, de sorte que le guide de nettoyage (17) s'étend sur toute la rangée de dents,
dans lequel le guide de nettoyage (17) présente une région de bord vestibulaire (21) en forme d'arc et une région de bord buccale (23) en forme d'arc qui, lorsque le guide de nettoyage (17) est en place, s'étendent respectivement au-dessus de la gencive vestibulaire et de la gencive (19) buccale adjacentes à l'arcade dentaire (3),
et le guide de nettoyage (17) présente au moins un évidement (25, 26) à l'emplacement d'au moins un côté de bord (13) d'un espace interdentaire et/ou d'un espace intermédiaire de couronne d'implant (9, 11) dans l'arcade dentaire (3).

2. Guide de nettoyage selon la revendication 1,
dans lequel l'évidement (25, 26) est à l'emplacement d'au moins la région cervicale de l'espace interdentaire et/ou de l'espace intermédiaire de couronne d'implant (9, 11).

3. Guide de nettoyage selon la revendication 1 ou 2, dont l'évidement (25) s'étend de la région de bord vestibulaire (21) à la région de bord buccale (23) le long du tracé de l'au moins un côté de bord (13) de l'espace interdentaire et/ou de l'espace intermédiaire de couronne d'implant (9, 11).

4. Guide de nettoyage (17) selon la revendication 3,
dans lequel l'évidement (25) est conçu de telle sorte qu'il s'étend également sur au moins une région de bord d'une jonction couronne d'implant-gencive (33).

5. Guide de nettoyage (17) selon la revendication 1 ou 2, dont l'évidement (26) s'étend uniquement sur un côté vestibulaire du guide de nettoyage (17).

6. Guide de nettoyage (17) selon la revendication 5, dans lequel un autre évidement (26) opposé s'étend uniquement sur un côté buccal du guide de nettoyage (17).

7. Guide de nettoyage (17) selon l'une des revendications précédentes, dans lequel un bord (24) de l'évidement (25, 26) est biseauté.

8. Guide de nettoyage (17) selon l'une des revendications précédentes, comportant une pluralité d'évidements (25) respectivement à l'emplacement d'au moins un côté de bord (13) d'un espace interdentaire et/ou d'un espace intermédiaire de couronne d'implant (9, 11), qui s'étendent respectivement de la région de bord vestibulaire (21) à la région de bord buccale (23) le long du tracé d'au moins un côté de bord (13) de l'espace interdentaire et/ou de l'espace intermédiaire de couronne d'implant (9, 11) et comportant au moins une région en forme de barrette (27, 29) qui s'étend de la région de bord vestibulaire (21) à la région de bord buccale (23) entre deux évidements (25) voisins.

9. Guide de nettoyage (17) selon la revendication 8,
dont la région en forme de barrette (27, 29) est conçue pour s'étendre sur une couronne dentaire (5) ou une couronne d'implant (7) ou dans un intervalle dentaire (11).

10. Guide de nettoyage (17) selon l'une des revendications précédentes, comportant une pluralité d'évidements (26) qui s'étendent uniquement sur un côté vestibulaire du guide de nettoyage (17) et à chacun desquels fait face un évidement (26) s'étendant uniquement sur un côté buccal du guide de nettoyage (17), dans lequel les évidements (26) sont situés à des emplacements de bords d'espaces intermédiaires de couronnes d'implants (9) d'une pluralité de couronnes d'implants bloquées (7).

11. Guide de nettoyage (17) selon l'une des revendications précédentes, lequel guide de nettoyage est adapté individuellement à l'arcade dentaire (3).

12. Guide de nettoyage (17) selon l'une des revendications précédentes, dont l'évidement (25, 26) est conçu de telle sorte que l'espace interdentaire (9, 11) est accessible à un appareil de nettoyage des espaces interdentaires.

13. Guide de nettoyage (17) selon l'une des revendications précédentes, dont l'évidement (25, 26) est conçu de telle sorte qu'au moins la région de bord de la jonction couronne d'implant-gencive (33) est accessible à un appareil de nettoyage prévu à cet effet.

14. Guide de nettoyage (17) selon la revendication 12 ou 13,
lequel comprend un moyen pour le guidage (31) de l'appareil de nettoyage.

15. Guide de nettoyage (17) selon l'une des revendications 12 à 14,
dans lequel l'appareil de nettoyage est l'un du groupe comportant une brosse interdentaire (35), un support de fil dentaire (47), une douche buccale (55) et un appareil à flux d'air.

16. Procédé pour la fabrication d'un guide de nettoyage (17) selon l'une des revendications 1 à 15, dans lequel, sur la base d'une empreinte et/ou d'un balayage d'une arcade dentaire (3), le guide de nettoyage (17) est imprimé ou fraisé dans le cadre d'une production assistée par ordinateur.

17. Produit logiciel comprenant des instructions qui, lors de l'exécution du procédé selon la revendication 16, conduisent à la fabrication d'un guide de nettoyage (17) selon l'une des revendications 1 à 15, dans lequel le produit logiciel est conçu pour générer, à partir de données représentant une empreinte ou un balayage d'une arcade dentaire (3), des données pour la production assistée par ordinateur du guide de nettoyage.
